# EUROPÄISCHE PATENTSCHRIFT

(11) **EP 1 502 799 B1**
(45) Veröffentlichungstag und Bekanntmachung des Hinweises auf die Patenterteilung: **11.10.2006**
(21) Anmeldenummer: 04017588.7
(22) Anmeldetag: 24.07.2004
(51) Int. Cl.: B60K 17/14, B60K 17/04, F16H 57/08

(54) **Radnabenantrieb**
Wheel hub drive
Entraînement de moyeu de roue

(30) Priorität: 31.07.2003 DE 10334937
(43) Veröffentlichungstag der Anmeldung: 02.02.2005
(73) Patentinhaber: ZF FRIEDRICHSHAFEN AG, 88038 Friedrichshafen (DE)
(72) Erfinder: Stübner, Frank, 99894 Ernstroda (DE)

(56) Entgegenhaltungen:
- DE-A- 10 062 315
- DE-B- 1 227 783
- GB-A- 1 347 192
- US-A- 5 609 542
- US-A- 5 649 879

## Beschreibung

Die vorliegende Erfindung betrifft einen Radnabenantrieb für ein deichselgeführtes Fahrzeug, insbesondere ein Flurförderfahrzeug, der einen Antriebsmotor, ein aus zwei Stufen bestehendes Planetengetriebe und ein Gehäuse aufweist, wobei die zweite Stufe des Planetengetriebes einen Satz Planetenräder aufweist, der in einem Planetenträger gelagert ist, welcher einen Teil des Gehäuses darstellt, nach dem Oberbegriff des Anspruchs 1.

Derartige Radnabenantriebe werden bevorzugt für Flurförderfahrzeuge verwendet, die zum Beispiel dem Transport schwerer oder sperriger Lasten dienen oder auch für mobile Fahrzeuge, wie Golfwagen, da sie eine kompakte Bauform und ein geringes Gewicht aufweisen.

DE 100 62 315 zeigt ein Radnabenantrieb gemäß dem Oberbegriff des Anspruchs 1, wobei die Planetenradbolzen Anbauteile des Planetenträgers sind.

Ein elektrischer Radnabenantrieb ist zum Beispiel in der EP 0 525 663 beschrieben, bei dem ein Elektromotor über Lenker mit dem Fahrzeugchassis verbunden ist und die Abtriebswelle einstückig mit einem inneren Zentralrad einer Planetenstufe verbunden ist, deren Hohlrad den Abtrieb bildet, wobei deren Planeten auf einem ortsfest gehaltenen Planetenträger gelagert sind. Hierbei ist jedoch die Abtriebswelle derart elastisch auszuführen, dass sich das innere Zentralrad einstellen kann, da die Abtrieb,swelle starr über zwei Lager gelagert ist und das innere Zentralrad der Planetenstufe einstückig mit der Abtriebswelle verbunden ist.

In der DE 101 01 669 der Anmelderin ist ein kompakter und nur ein geringes Gewicht aufweisender Radnabenantrieb beschrieben, dessen Elektromotor als Asynchronmotor ausgebildet ist, mit dem hohe Drehzahlen erreichbar sind. Die Abtriebswelle ist hierbei einstückig mit einem inneren Zentralrad einer Planetenstufe verbunden und schrägverzahnt ausgeführt, wobei mindestens ein Planetenrad auf einem Planetenträger gelagert ist, welcher den Abtrieb bildet. Das Hohlrad des Planetengetriebes ist drehfest in einem Gehäuse gehalten , während die Abtriebswelle des Elektromotors einerseits über ein Lager im Gehäuse des Motors und andererseits im Planetenträger gelagert ist, der wiederum über eine Radlagerung, die die Radkräfte aufnimmt, im Gehäuse gelagert ist.

Das Planetengetriebe ist einerseits benachbart zum Elektromotor und andererseits benachbart zur Radlagerung angeordnet. Zwischen dem Planetengetriebe und dem Elektromotor ist eine Trennwand mit einer Dichtung eingesetzt und im Bereich der Radlagerung ist eine Bremse vorgesehen. Die Radlagerung weist zwei Kegelrollenlager auf, wobei die Innenringe über eine Abstandshülse distanziert sind und der Abtriebsflansch über einen Kegelschrumpfsitz auf dem Planetenträger gehalten ist.

Im Hinblick auf ein niedriges Geräuschniveau bei hohen Drehzahlen des Elektromotors ist das Getriebe einerseits schrägverzahnt und andererseits mit einer Zähnezahlabstimmung mit ungerader Ordnungszahl versehen; die Verzahnung des Planetengetriebes ist dabei derart ausgelegt, dass eine gleichzeitige Eingriffsfolge zwischen dem inneren Zentralrad und den Planetenrädern besteht.

Ein weiterer Radnabenantrieb für Flurförderfahrzeuge, wie zum Beispiel Hubwagen, mit einem Antriebsmotor und mit mindestens einer Getriebestufe, die in einem Gehäuse angeordnet ist zum Antrieb eines Laufrades, wobei der Antriebsmotor über ein zur Lenkung vorgesehenes Betätigungsteil steuerbar ist und wobei der Antriebsmotor koaxial zur Laufradachse angeordnet ist, während sich das Laufrad in einem Teil des Gehäuses abstützt, ist aus der DE 101 32 319 bekannt.

Werden die Flurförderfahrzeuge zum Transport von schweren Lasten eingesetzt, so sind sie in der Regel mit zwei Lastgabeln versehen, die in geeignete Paletten eingreifen um diese samt den darauf gelagerten Gütern änzuheben. Zum Transport der Lasten sind die Lastgabeln mit Transportrollen versehen, während auf der Bedienerseite des Flurförderfahrzeuges ein Antriebsrad vorgesehen ist. Über eine Deichsel kann hierbei die Bewegungsvorrichtung des Flurförderfahrzeuges mit den Waren auf Grund der Drehbarkeit des Antriebsrades über die Deichsel bestimmt werden.

Die Flurförderfahrzeuge werden häufig zum Transport schwerer Lasten eingesetzt, wobei jedoch dem Bediener nicht immer zugemutet werden kann, dass er diese Lasten über größere Strecken zieht. Stattdessen werden hilfsweise elektromotorische Antriebe verwendet, die direkt oder indirekt über eine Getriebestufe zumindest ein Antriebsrad antreiben, wobei sie seitlich am Flurförderfahrzeug angeflanscht sind.

Durch derartige Antriebe wird jedoch die Größe des Flurförderfahrzeuges nachteilig beeinflusst ohne die Lastkapazität zu erhöhen. Auf Grund der üblicherweise flachen Bauweise der Flurförderfahrzeuge im Gabelbereich und der damit verbundenen geringen Bauhöhe der Räder verbleibt nur ein beschränkter Raum für den Einbau des elektromotorischen Antriebs in das Flurförderfahrzeug. Daneben ist noch zu berücksichtigen, dass die Flurförderfahrzeuge sehr wendig ausgelegt sein müssen und damit nur kleine Wendekreise aufweisen dürfen. Ferner ist zu berücksichtigen, dass für den Transport schwerer Lasten die vorhandenen Räder bzw. Antriebsräder für diese Belastungen auszulegen sind.

Um diesen Anforderungen gerecht zu werden, wird in der oben erwähnten DE 101 32 319 vorgeschlagen, dass das Laufrad und ein zweites äußeres Gehäuseteil über ein Lagerelement gegenüber dem mittleren Gehäuseteil abgestützt sind, wobei das Lagerelement fluchtend zur Laüfradmittelachse angeordnet sind.

Durch diese Art der Lagerung des Laufrads soll erreicht werden, dass die auftretenden Kräfte durch das mittlere Lagerelementbei Geradeausfahrt in das Gehäuse eingeleitet werden. Durch einen axialen Versatz der Getriebestufe gegenüber dem Antriebsmotor und eine koaxiale Anordnung zur Laufradachse kann die Abmessung der Antriebseinrichtung gering gehalten werden. Durch eine Verbindung des Gehäuses mit dem Fahrzeug über einen Drehkranz, dergestalt, dass die Drehkranzachse die Laufradachse schneidet und zugleich fluchtend zur Laufradmittelachse angeordnet ist, kann das Antriebsrad bzw. Laufrad zentrisch in der Drehkranzachse angeordnet werden, sodass der Wenderadius nicht beeinträchtigt wird.

Zur Aufnahme der entstehenden Lagerkräfte ist das Gehäuse in drei Gehäuseteile unterteilt, wobei das mittlere Gehäuseteil starr mit einem Drehkranzlagerinnenring verbunden ist, das erste äußere Gehäuseteil drehfest mit dem mittleren Gehäuseteil verbunden und das zweite äußere Gehäuseteil drehbar gegenüber den anderen beiden Gehäuseteilen gelagert ist und zur Abstützung des Laufrades dient.

Bei diesem bekannten Radnabenantrieb besteht die Getriebestufe aus einem Planetenradgetriebe, wobei ein Hohlrad in eine Bohrung eines Gehäuseteils drehfest eingesetzt ist. Über eine Innenverzahnung kämmen Planetenräder mit einer Außenverzahnung des Hohlrades sowie mit einer Außenverzahnung eines Sonnenritzels. Das Sonnenritzel ist drehfest mit dem Wellenende der Ankerwelle des Antriebsmotors verbunden, sodass über das Sonnenritzel und die Planetenräder sowie den zugehörigen Planetenträger ein Drehmoment auf eine zweite Getriebestufe übertragen wird, die einen Satz Planetenräder aufweist. Dieser zweite Satz Planetenräder kämmt sowohl mit einer Verzahnung des ersten Planetenträgers als auch mit der Innenverzahnung des Hohlrades, wobei die Planetenräder des zweiten Satzes in einem zweiten Planetenträger gelagert sind. Dieser zweite Planetenträger bildet den Abschluss der Getriebestufe und ist gleichzeitig das drehbare Gehäuseteil, das mit dem Laufrad verbunden ist.

Zu diesem Zweck ist der zweite Planetenträger mit einem als Innenfelge für das Laufrad ausgebildeten Flanschkragen verschraubt und zwar über eine Vielzahl entlang des Umfangs verteilter Schraubbolzen, die durch Bohrungen im Flanschkragen hindurch in Gewindebohrungen des Planetenträgers eingreifen. Die Abstützung der Innenfelge und des Laufrads gegenüber dem drehfest ausgebildeten Gehäuseteil erfolgt über ein Wälzlager mit einer auf dem drehfest ausgebildeten Gehäuseteil sitzenden Lagerinnenschale. Die Lageraußenschale sitzt.hingegen in einer Ausnehmung des drehbaren Gehäuseteils. Zusätzlich ist das Wälzlager durch eine Dichtung gegen Verschmutzung zu schützen.

Der gesamte Radnabenantrieb ist mit einem Drehkranzlagerinnenring über den Flanschkragen verschraubt, der wiederum durch einen Drehkranzlageraußenring über Laufkugeln drehbar gelagert ist. Der Drehkranzlageraußenring ist ferner unmittelbar mit dem Flurförderfahrzeug verbunden, während an dem Drehkranzlagerinnenring eine Deichsel zur Führung des Fahrzeuges befestigt ist.

Bei einer Variante dieses bekanten Radnabenantriebs besteht das mittlere Lagerelement aus einer Vierpunklagerung, die eine innere Lagerschale und eine äußere Lagerschale aufweist, wobei die letztere als Hülsenring ausgebildet ist, die über mehrere über den Umfang verteilte Schraubbolzen mit dem drehfesten Gehäuseteil verbunden ist. Zwischen den Lagerschalen sind Laufkugeln angeordnet, die jeweils in einer Zweipunktanlage an der äußeren und an der inneren Lagerschale anliegen und somit am feststehenden Gehäuseteil und am drehbeweglichen Gehäuseteil zur Aufnahme von Radial- und Querkräften.

Der aus dieser Veröffentlichung bekannte Radnabenantrieb für ein deichselgeführtes Flurförderfahrzeug weist noch den Nachteil auf, dass der Planetenträger der zweiten Stufe mehrteilig ausgeführt ist, das heißt, das die Planetenradbolzen in dem eigentlichen Trägerteil gesondert zu befestigen sind.

Aufgabe der vorliegenden Erfindung ist, einen Planetenträger für den Radnabenantrieb eines deichselgeführten Fahrzeuges zu schaffen, derkostengünstiger herstellbar ist und der dabei die gleichen Funktionen erfüllt wie der herkömmliche Planetenträger.

Diese Aufgabe wird durch die Merkmale des Patentanspruchs 1 gelöst. Weitere Ausgestaltungen und Vorteile gehen aus den Unteransprüchen hervor.

Zur Lösung dieser Aufgabe wird vorgeschlagen, dass der Planetenträger einstückig mit den Planetenradbolzen ausgebildet ist, die angegossen oder angeschmiedet sind und die derart ausgestaltet sind, dass sie alle auftretenden Kräfte übertragen.

Diese Ausgestaltung der Planetenradbolzen in Gussform oder Schmiedeform bringt den Vorteil mit sich, dass das bisher erforderliche Wälzlager für die Lagerung der Planetenräder, bei dem sich die Wälzkörper direkt auf den deswegen gehärteten Planetenradbolzen abwälzen, entfallen kann und durch eine Gleitlagerbuchse oder Gleitlageranlaufscheiben ersetzt werden kann, die wesentlich billiger in der Herstellung sind.

Die Gleitlager weisen eine lange Lebensdauer auf, da in der zweiten Planetenstufe nur geringe Drehzahlen auftreten. Für die Übertragung der Drehmomente sind die Gleitlager gut geeignet.

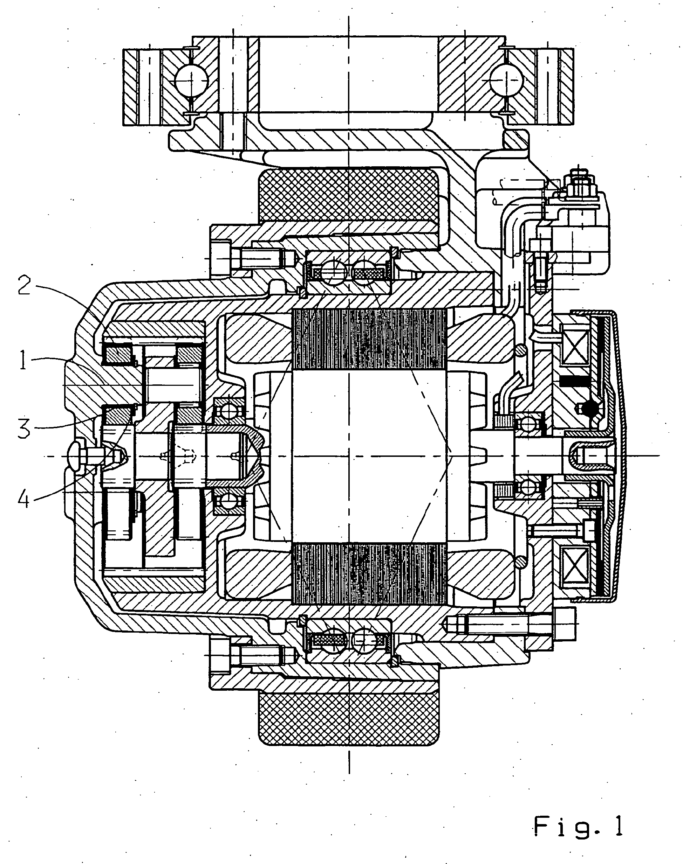

Im Folgenden wird die Erfindung an Hand der Zeichnung näher erläutert, wobei in der einzigen Figur ein Längsschnitt durch den eingangs näher beschriebenen Radnabenantrieb dargestellt ist, der gemäß der Erfindung ausgestaltet ist.

Dieser Radnabenantrieb weist, wie es dem Fachmann geläufig ist, einen Antriebsmotor, ein Planetengetriebe und eine Bremseinrichtung auf. Das Planetengetriebe weist eine erste Getriebestufe auf, deren Hohlrad drehfest in das Gehäuse des Radnabenantriebs eingesetzt ist. Über eine Innenverzahnung kämmen die Planetenräder mit einer Außenverzahnung mit dem Hohlrad sowie mit einer Außenverzahnung eines Sonnenritzels, sodass dieses mit den Planetenrädern und einem zugehörigen Planetenträger ein Drehmoment auf eine zweite Getriebestufe, bestehend aus einem zweiten Satz Planetenräder, überträgt. Der zweite Satz Planetenräder kämmt sowohl mit einer Verzahnung des ersten Planetenträgers als auch mit der Innenverzahnung des Hohlrades, wobei die Planetenräder in einem zweiten Planetenträger gelagert sind.

Gemäß der Erfindung ist dabei vorgesehen, dass die Planetenradbolzen 1 angegossen oder angeschmiedet sind und dass die Lagerung 2 für die Planetenräder als Gleitlagerbuchse 3 oder als Gleitlageranlaufscheibe 4 ausgeführt ist. Diese Gleitlager sind kostengünstig herstellbar und ebenso kostengünstig einbaubar, da sie in die Planetenräder eingepresst werden können.

Die erfindungsgemäße Ausgestaltung der zweiten Planetenstufe mit den an dem Planetenträger angegossenen oder angeschmiedeten Planetenradbolzen an Stelle der bisher erforderlichen gesonderten Befestigung der Planetenradbolzen am eigentlichen Trägerteil vereinfacht die Herstellung des damit ausgerüstet Radnabenantriebs, da weniger Montageschritte beim Zusammenbau erforderlich sind und senkt die Kosten der Herstellung, da die Planetenradbolzen einstückig und vor dem eigentlichen Zusammenbau des Antriebs zusammen mit den Planetenträgern in einem Arbeitsschritt herstellbar sind, wobei sie die gleichen Funktionen übernehmen wie die herkömmlichen Planetenradbolzen.

## Patentansprüche

1. Radnabenantrieb für ein deichselgeführtes Fahrzeug, insbesondere ein Flurförderfahrzeug, der einen Antriebsmotor, ein aus zwei Stufen bestehendes Planetengetriebe und ein Gehäuse aufweist, wobei die zweite Stufe des Planetengetriebes einen Satz Planetenräder aufweist, der in einem Planetenträger gelagert ist, welcher einen Teil des Gehäuses darstellt, das mit einem Laufrad verbunden ist, und wobei der Planetenträger mit Planetenradbolzen versehen ist, **dadurch gekennzeichnet, dass** der Planetenträger einstückig mit den Planetenradbolzen (1) ausgebildet ist.

2. Radnabenantrieb nach Anspruch 1, **dadurch ge- kennzeichnet, dass** die Planetenradbolzen (1) am Planetenträger angegossen sind.

3. Radnabenantrieb nach Anspruch 1, **dadurch ge- kennzeichnet, dass** die Planetenradbolzen (1) am Planetenträger angeschmiedet sind.

4. Radnabenantrieb nach einem der vorhergehenden Ansprüche, **dadurch gekennzeichnet, dass** die Planetenräder auf Gleitlagern gelagert sind.

5. Radnabenantrieb nach Anspruch 4, **dadurch gekennzeichnet, dass** das Gleitlager eine Gleitlagerbuchse(3) ist.

6. Radnabenantrieb nach Anspruch 4, **dadurch gekennzeichnet, dass** das Gleitlager aus Gleitlageranlaufscheiben (4) besteht.

## Claims

1. Wheel hub drive for a pedestrian-operated vehicle, in particular a shop-floor vehicle which has a drive motor, a planetary gear set comprising two stages, and a housing, wherein the second stage of the planetary gear set has a set of planetary wheels, which is mounted in a pinion cage that comprises part of the housing, said housing being linked to a running wheel, and wherein the pinion cage is provided with planetary wheel bolts, **characterised in that** the pinion cage is constructed in one piece with the planetary wheel bolts (1).

2. Wheel hub drive according to claim 1, **characterised in that** the planetary wheel bolts (1) are cast onto the pinion cage.

3. Wheel hub drive according to claim 1, **characterised in that** the planetary wheel bolts (1) are forged onto the pinion cage.

4. Wheel hub drive according to one of the preceding claims, **characterised in that** the planetary wheels are mounted on plain bearings.

5. Wheel hub drive according to claim 4, **characterised in that** the plain bearing is a plain bearing bush (3).

6. Wheel hub drive according to claim 4, **characterised in that** the plain bearing comprises thrust washers (4).

## Revendications

1. Entraînement sur moyeu de roue pour un véhicule guidé par timon, en particulier pour un véhicule de manutention, qui comporte un moteur d'entraînement, un mécanisme épicycloïdal composé de deux étages, et un carter, le deuxième étage du mécanisme épicycloïdal comportant un jeu de roues satellites qui est monté rotatif dans un porte-satellites, lequel représente une partie du carter qui est solidaire d'une roue de roulement au sol, et dans lequel le porte-satellites est muni d'axes de roues satellites, **caractérisé en ce que** le porte-satellites est formé d'une seule pièce avec les axes des roues satellites (1).

2. Entraînement sur moyeu de roue selon ia revendication 1, **caractérisé en ce que** les axes des roues satellites (1) sont fondus d'une pièce avec le porte-satellites.

3. Entraînement sur moyeu de roue selon la revendication 1, **caractérisé en ce que** les axes des roues satellites (1) sont forgés sur le porte-satellites.

4. Entraînement sur moyeu de roue selon l'une des revendications précédentes, **caractérisé en ce que** les roues satellites sont montées sur des paliers lisses.

5. Entraînement sur moyeu de roue selon la revendication 4, **caractérisé en ce que** le palier lisse est un coussinet lisse (3).

6. Entraînement sur moyeu de roue selon la revendication 4, **caractérisé en ce que** le palier lisse est composé de rondelles de congé de palier lisse (4).
